# EUROPEAN PATENT SPECIFICATION

(11) **EP 3 732 239 B1**
(45) Date of publication and mention of the grant of the patent: **02.07.2025**
(21) Application number: 17936802.2
(22) Date of filing: 27.12.2017
(51) Int. Cl.: C08L 23/06, C08L 23/04, C08K 3/04, C08K 3/34, F16L 57/00, G02B 6/44, H01B 3/30, C08G 101/00

(54) **POLYETHYLENE COMPOSITION**
POLYETHYLENZUSAMMENSETZUNG
COMPOSITION DE POLYÉTHYLÈNE

(43) Date of publication of application: 04.11.2020
(73) Proprietor: Public Joint Stock Company "Sibur Holding", Tobolsk, Tyumen region 626150 (RU)
(72) Inventor: VOLKOV, Alexey Mikhailovich, Seversk, 636019 (RU); RYZHIKOVA, Irina Gennadievna, Seversk, 636037 (RU); BAUMAN, Nikolay Alexandrovich, Tomsk, 634061 (RU); ZHUKOVA, Oksana Valentinovna, Seversk, 636013 (RU)
(74) Representative: Peters, Andreas
(86) International application number: PCT/RU2017/000995
(87) International publication number: WO 2019/132694

(56) References cited:
- WO-A1-2004/094526
- WO-A1-2005/041214
- WO-A1-2006/132747
- WO-A1-2016/082211
- CN-A- 106 750 844
- CN-B- 104 277 309
- RU-C2- 2 436 815
- US-A- 5 530 055
- US-A- 5 729 929
- US-A1- 2001 016 621
- US-A1- 2014 127 438

## Description

### Field of the invention

The present invention relates to compositions based on mixtures of structurally different polyethylenes (PE), such as low-density polyethylene (LDPE), linear polyethylene (LPE), and high-density polyethylene (HDPE), which can be used in the cable and pipe industry and in the manufacture of packaging materials and articles with good low-temperature properties.

### Background

In the prior art there are known materials based on high-density, medium-density and low-density polyethylenes (PE) produced by various methods, both by a radical mechanism under pressure and temperature (LDPE (HPPE)) and by a catalytic method under low pressure and temperature (homo- and co-polymers (HDPE (LPPE)) and copolymers of ethylene with higher α-olefins, such as linear low-density PE (LLDPE) and medium-density PE (MDPE)). Also known are compositions produced on the basis of these individual types of PE aimed at use in certain narrow fields of technology due to a limited complex of their properties.

Thus, LDPE-based compositions are known for use in the cable industry. For example, LDPE-based compositions for the sheath of electrical cables of 153-10K grade have the following main characteristics: a tensile yield strength (σ_{y}) of not less than 9.8 MPa; a tensile strength (σ) of not less than 13.7 MPa; a relative elongation at break (εᵣ) of not less than 600%; a resistance to cracking of not less than 500 hours, and an MFR_{(190°C/2.16 kg)} of not less than 0.39 g/10 min. However, even a slight increase in the MFR of such a composition to increase the productivity of cable lines leads to a sharp drop in its resistance to cracking. Other disadvantages of the presented composition are insufficient strength, heat resistance (Vicat heat resistance, 10N of not more than 90°C), low surface hardness, which gives it a low wear resistance, thereby narrowing possible applications of such a composition and reducing its use in both cable and pipe industries and in other industrial sectors.

Improved deformation-strength characteristics, including at low temperature, are shown for compositions based on low-density LPE and medium-density PE (LLDPE and MDPE). Thus, patent JP 3495391 provides an LLDPE-based composition that is characterized by an MFR of 0.1-1.5 g/10 min and a broad molecular weight distribution (MWD). A peculiarity of such a composition is its relative elongation at break (εᵣ) determined at -45°C, which is not less than 200%. The disclosed properties of the composition permit its use in the pipe industry as an anticorrosive coating for steel pipes intended for use, in particular, in cold climate regions.

Application US 20070254990 describes a composition based on monomodal LPEs of low and medium density with an expanded spectrum of applications provided by an increase in the melt flow rate (MFR, from 1 to 10 g/10 min) and a narrowing of the MWD (Mw/Mn, from 2.0 to 3.0).

However, the main disadvantages of the LPE-based composition are insufficient heat resistance, processing difficulties (pulsation and low melt strength), low barrier properties, and a number of others, which also narrows possible applications of such compositions.

These disadvantages can be eliminated by using in the composition of polyethylene its homo- and copolymer of high density, HDPE. The main advantage of this material over all types of polyethylene is a significant amount of a crystalline phase in its structure, which makes it superior primarily in strength characteristics, heat resistance and barrier properties. However, on the other hand, an increased crystallinity also entails a number of significant drawbacks: reduced resistance to cracking of easily flowable compositions (at an MFR_{(190/2.16)} of >1g/10 min, its resistance to cracking is less than 50 h) and hardness (flexural modulus is higher than 1000 MPa). In addition, because of a rate of crystallization, HDPE is characterized by unsatisfactory optical properties; in particular, the haze of a film made of HDPE is more than 40%.

A disadvantage, such as low resistance to cracking of easily flowable compositions based on HDPE, can be eliminated by using **bimodal HDPE** in the composition, which comprises two fractions with different molecular weight characteristics. The low molecular weight part ensures its good processibility, and the and even ultra high molecular weight fraction solves the problem of providing such a composition with a required level of strength characteristics, heat resistance and resistance to cracking.

US6645588 provides a bimodal HDPE composition. According to this invention, the melt flow rate of the low molecular weight fraction of the PE is from 50 to 2000 g/10 min. The melt flow rate of the high molecular weight fraction provides the total MFR of the composition of from 0.1 to 50 g/10 min. According to RU 2333924**,** the molecular weight fraction of bimodal HDPE can also be copolymer.

A trimodal PE molding composition for coating steel pipes, having a high resistance to cracking is known from RU 2408620**.** The density of the composition is from 0.94 to 0.95 g/cm³. The composition comprises 45-55 wt.% of low molecular weight PE, 30-40 wt.% of high molecular weight copolymer of ethylene with higher C₄₋₈ α-olefins, and 10-20 wt.% of ultrahigh molecular weight copolymer of ethylene with C₄₋₈ α-olefins. The MFR_{(190/5kg)} of the composition is from 1.2 to 2.1 g/10 min.

Patents RU 2446197**,** RU 2453569**,** and RU 2453570 provide a **multimodal** composition with parameters and properties varying in wide ranges. The most balanced composition of a bi- and multimodal copolymer intended for external insulation of steel pipes operating at low temperatures (down to -40°C) is provided in application WO 2007141022**.** A peculiarity of the polymer contained in the composition is a narrow range of permissible values of density (from 0.937 to 0.945 g/cm³), which provides an advantage of this material in the parameter of relative elongation at break at a temperature of -45°C (up to 200-250%).

However, multimodal HDPE-based compositions have low values of hardness, elasticity and impact resistance at low and ultralow temperatures due to a high crystallinity of HDPE. They also have unsatisfactory optical properties, which in turn excludes their use in the production of film materials.

Possible ways of solving the problem of improving the balance between low temperature properties and heat resistance of polyethylene compositions are available from the prior art. These approaches are based on the use of a binary combination of **HDPE and LLDPE** in a composition. Thus, JP 09241437 has succeeded in improving simultaneously the resistance to penetration at temperatures of up to 70°C and high values of low-temperature characteristics of polyethylene pipe insulation, by using a mixture comprising 60 to 90 wt.% of LLDPE and 10 to 40 wt.% of HDPE. The relative elongation at break (εᵣ) determined for this composition at a temperature of -45°C is more than 400%. A disadvantage of the composition is its high viscosity, an MFR_{(190/2.16)} of less than 1 g/10 min, limiting its wide application.

The invention according to CN 101747552 relates to a composition for coating steel pipes, wherein the composition is based on a mixture of LPE and HDPE and is characterized by the content of HDPE of 45 to 80 wt.% and LLDPE of 15 to 45 wt.%. The HDPE component comprises a mixture of grades for different purposes: 1 pipe grade, 2 hollow grades, 1 film grade, and 1 wiredrawing grade, in a certain ratio. In addition, this composition includes 0.3 to 1 wt. part of an antioxidant, 0.5 to 1.5 wt. parts of a processing additive, and 3 to 7 wt. parts of carbon black masterbatch. The proposed material is characterized by a balance of strength of from 20 to 27.5 MPa, heat resistance of from 110 to 123°C, and impact strength at low temperatures. A disadvantage is the composition complexity and a low MFR_{(190/2.14)} of 0.2 to 0.44 g/10 min, which limits its processibility.

Other combinations of polyethylenes with different structural organization of macrochains are also known from the prior art. These compositions are binary mixtures composed of **LLDPE and LDPE (HPPE).** The properties of such a composition include a combination of properties of individual components constituting this composition. Thus, JP 08134287 shows that compositions based on a mixture of LLDPE and LDPE demonstrate a higher durability of the stabilizing action of phenolic antioxidants with a MW of not less than 500 c.u., after exposure of the material to hot water for at least one month. The ratio of LLDPE to LDPE can vary in a wide range: from 5 to 95 wt.% for LLDPE and from 5 to 95 wt.% for LDPE. The proposed material is used for coating steel pipelines. Its disadvantage is a low heat resistance; thus, T_{Vicat}, _{10H} is less than 90°C.

Patent US 8981007 provides a composition for power cables, with improved processing and dielectric properties achieved due to addition of 5 to 30 wt.% of LDPE to the basic LLDPE. In order to improve resistance to water tree, the composition can further comprise 1 to 20 wt.% of polyethylene having 0.1 to 2 wt.% of grafted polar groups. A disadvantage of this composition, similarly to the previous one, is a low heat resistance (T_{Vicat, 10H} of less than 90°C) and strength parameters (tensile strength of less than 15 MPa).

The composition disclosed in EP 0679704 is based on LLDPE and LDPE in order to expand the applications of the materials that can be used not only for insulation of steel pipes but also for lamination of various solid surfaces. This composition comprises 55 to 90 wt.% of LDPE and 10 to 45 wt.% of LLDPE. The LDPE used in the composition is characterized by an MFR_{(190/2.16kg)} of from 0.1 to 3.0 and a density of from 0.915 to 0.930 g/cm³. LLDPE has the following characteristics: its MFR_{(190/2.16kg)} is from 0.5 to 10.0 and the density is from 0.895 to 0.920 g/cm³. The composition demonstrates anticorrosion resistance, abrasive wear resistance, resistance to chemicals, a good processability, a high hardness, and an improved impact resistance at low temperatures. Its disadvantage, similarly to the previous analogous binary systems, is low heat resistance, strength and resistance to penetration at elevated temperatures, insufficient for a number of applications.

A binary mixture of multi-(bi)modal HDPE and LDPE is also known from the prior art. The main purpose of this combination is to eliminate or minimize drawbacks in the rheology of the melt of materials based on multi-(bi)modal HDPE, which are low values of melt strength (MS), draw resonance, and neck-in of the melt of multi-(bi)modal HDPE extruded from a die. Similar problems are also characteristic for LLDPE. They result from the linear nature of the macrochains of LLDPE, as well as in HDPE. Thus, a method of combining polyethylenes having linear macrochains with high and long-chain-branched LDPE makes it possible to solve similar problems. However, a binary combination of multi-(bi)modal HDPE and LDPE is more advantageous compared with a mixture of LLDPE and LDPE due to its obvious advantages in heat resistance, strength, and barrier properties.

WO 2005068548 provides a mixture of 40 to 99% (preferably from 40 to 70 wt.%) of multi-(bi)modal HDPE with a density of from 0.950 to 0.968 g/cm³, consisting of at least two fractions: low molecular weight homopolymer of ethylene with a density of 0.978 g/cm³ and an MRF_{(190/5kg)} of from 100 to 2000 g/10 min and high molecular weight copolymer with a comonomer content of from 0.2 to 2.0 mol% at the total MRF of the multi-(bi)modal HDPE of from 5 to 20 g/10 min, with 1-60% (preferably from 30 to 60 wt.%) LDPE with a density preferably of from 0.915 to 0.930 g/cm³ and an MFR_{(190/2.16kg)} of from 3 to 15 g/10 min, wherein the LDPE has highly branched macrochains: at least 60 branches per molecule with a preferable length of the branches of not less than 100 carbon atoms. It should be noted that the binary composition based on multi-(bi)modal HDPE and LDPE is intended for a narrow field of applications, in particular, only for laminating and coating solid surfaces with a thin polymer barrier layer, due to high MFR values of both polymer components composing the composition: the MFR of multi-(bi)modal HDPE is not less than 5 g/10 min and the MFR of LDPE is not less than 3 g/10 min. It is evident that a consequence of such a high flow rate of the present composition will be a significant drop in such parameters as resistance to cracking and melt strength. In addition, unavoidable drawbacks of the binary mixture of multi-(bi)modal HDPE and LDPE remain the level of low-temperature properties which is insufficient in comparison with LLDPE, relatively low deformation-strength characteristics, such as strength and relative elongation at break, poor optical properties, and a number of others. In addition, significant problems arising with a binary mixture of high-crystalline multi-(bi)modal HDPE and highly branched LDPE are due to thermodynamic incompatibility of these polymer matrices, which is manifested in particular at a low rate or uneven cooling of the melt of this composition. This processing mode causes a noticeable loss of all properties and the surface quality of a product.

It is possible to achieve high values of difficultly combined characteristics, such as tensile strength, heat resistance, surface hardness, elasticity, and extensibility at low and ultralow temperatures, as well as a high stress-cracking resistance and melt strength, which would make it possible to expand the spectrum of applications of such compositions if at least three polymers with different structural organization of macrochains are included in one composition. However, frequently, the main disadvantage of such compositions is the thermodynamic and composite incompatibility of their components.

A composition comprising three components (WO0248258) is closest to the claimed composition. This composition is intended for the production of extrusion coating and films.

The composition includes:
- 25 to 40 wt.% of linear low-density polyethylene (LLDPE), which is a copolymer of ethylene with C6-C8 α-olefin, having a melt flow rate at 190°C of from 0.5 to 10 dg/min, a density in the range of 0.90 to 0.93 g/cm³, and a polydispersity index of 1 to 4;
- 25 to 40 wt.% of high-density polyethylene (HDPE), which is an ethylene homopolymer or a copolymer of ethylene with α-olefin comprising 3 to 10 carbon atoms, having a density of 0.94 to 0.97 g/cm³, a melt flow rate at 190°C of 6 to 20 dg/min; and
- 25 to 40 wt.% of low-density polyethylene (LDPE), which is an ethylene homopolymer with a broad molecular weight distribution (polydispersity index from 9 to 12), having a melt flow rate at 190°C of 3 to 40 dg/min and a density of 0.90 to 0.93 g/cm³.

According to the embodiments, this composition is produced by dry blending the components. This composition is characterized by the following characteristics: tensile strength at break of 27600-34000 kPa, elongation of 839-927%, and puncture resistance of 378-510 n/cm², which allow the composition to be used for the production of films. However, a low resistance to cracking (312 hours) does not allow expanding the spectrum of its applications.

Thus, there is still a need for a composition with a unique combination of properties, allowing significantly broadening the spectrum of its applications.

### Summary of the invention

***The object of the present invention*** is to provide a composition characterized by a combination of the following features: high values of tensile strength, heat resistance, surface hardness, elasticity, and extensibility at low and ultralow temperatures, as well as high stress-cracking resistance and melt strength.

**The object is addressed and the technical result is achieved** by using in a composition several polyethylenes with structurally different macrochains, in particular, low-density polyethylene (LDPE), linear polyethylene (LPE), and high-density polyethylene (HDPE), as well as nucleating agents that control the crystallization rate of macromolecules.

The composition according to the present invention makes it possible to increase the tensile strength up to 25 MPa, is characterized by a Vicat (10H) heat resistance of up to 115°C, Shor D surface hardness of up to 60 c.u., high elasticity, in particular relative elongation at break of up to 800%, and an extensibility (relative elongation at break) at low and ultralow temperatures (-45°C) of up to 400%. In addition, the composition according to the invention has a high stress-cracking resistance of not less than 2000 h and a melt strength of up to 40 cN, which is important in a number of applications. The films obtained on the basis of the composition according to the invention are characterized by a high tensile strength, as well as by a high relative elongation at break in the longitudinal and transverse directions. In addition, the composition according to the invention is characterized by satisfactory optical properties (transparency) and surface quality (smoothness, uniformity).

The preparation of a composition with such combination of properties allows its universal application.

In particular, the preparation of the composition characterized by: an MFR_{(190/2.16)} of more than 0.7 g/10 min, a resistance to cracking of more than 1000 h, a tensile strength of more than 20 MPa, a relative elongation at break of more than 600%, a Shore hardness of more than 55 c.u., a Vicat heat resistance of above 105°C, and a good surface quality (smoothness and homogeneity of the surface) allows the composition to be used as the outer sheath of fiber-optic cables, as well as for insulation of steel pipes.

For the production of film materials, the following key properties must be satisfied: a tensile strength of 13.7 MPa or more, an elongation at break of not less than 600%, a longitudinal/transverse strength of film of greater than 15/15MPa, a longitudinal/transverse elongation of film of more than 250/500%, a film tear resistance in the longitudinal/transverse direction of more than 40/30 kgf/cm, transparency, gloss, and smoothness of the surface. In addition, an important property is the melt strength of a composition (not less than 20 cN).

Further, the composition, which has a melt strength of greater than 25 cN and more, and a Vicat heat resistance of 100°C or more, allows its use for the production of foamed materials.

Key requirements for the properties of a composition, which allow the use of the composition for insulation of electrical cables, are: a specific volumetric electrical resistivity of 10¹⁵ Ω·cm or more, an electrical strength of more than 25 kV/mm, and a brittleness temperature of not less than -50°C.

### Detailed description of the invention

A contribution of various polyethylenes to the final properties of compositions is specific. Thus, the presence of HDPE as the most highly crystalline component in a composition improves the strength characteristics of the composition, surface hardness and heat resistance. An increase in the relative content of LPE in the composition improves elasticity (relative elongation at break), especially at low and ultralow temperatures, resistance to cracking, and optical properties of the films produced on its basis. The contribution of LDPE is a reduction in the viscosity and an increase in the melt strength, which improves processibility of the composition, reduces technological and energy consumption, and provides new products that cannot be produced from HDPE/LPE binary compositions: foamed materials, blow-molded films and containers, etc. In addition, the presence of LDPE in the composition reduces negative effects during lamination: drow-resonance and neck-in for linear polymers (HDPE and LPE).

However, the use of a mixture of polyethylenes with certain properties is known to be insufficient to obtain a high-quality composition characterized by high physicochemical properties. In general, it is explained by lack of compositional compatibility between polyethylenes with different structures. The last circumstance is one of the main reasons for phase separation and significant deterioration of the characteristics of the composition, in particular its strength characteristics. A reason for the compositional incompatibility in the composition may consist in that the polyethylenes (HDPE, LDPE, LPE) comprise macromolecules with different degrees of branching and different molecular weights and are characterized by different crystallization rates. This results in phase separation during crystallization of polyethylenes, causing the formation of crystalline and amorphous regions. The compatibility between crystalline and amorphous regions depends on what, how and in which way the interfacial region in said polyethylenes is formed.

In this connection, due to different structures of polyethylenes used in the composition and different crystallization rates there is a need to provide their compositional compatibility.

The inventors have unexpectedly found a significant improvement of the compositional compatibility and structural homogeneity of the composition consisting of at least three polyethylenes of different nature, while significantly improving the quality of such systems, which are provided by organic and/or inorganic nucleating agents used as a controller of the crystallization rate of macromolecules.

In general, nucleating agents are known to be introduced into polymer melt to control the crystallization process, artificially generating crystallization grains [Hoffmann, K., Huber, G., Mader, D. Nucleating and clarifying agents for polyolefins, Macromol. Symp. 2001, 176, 83-91].

The rate and degree of crystallization of polymers, as well as the size of formed crystalline grains, are determined both by crystallization conditions (temperature and pressure) and by molecular weight characteristics (MW, MWD) and structural organization of polymer molecules. All recited factors have a direct effect on physical and mechanical, optical and other properties of polymers resulted from crystallization and products on their basis.

When using nucleating agents, the crystallization process of polymer begins and occurs on the surface of a new phase (i.e. on the surface of the agent) and differs by a high homogeneity throughout the polymer volume. The use of nucleating agents allows control of the crystallization parameters, thereby influencing the properties of crystalline polymer, which makes it possible to produce polymers with high crystallinity and low-sized crystalline grains similar in form, providing good optical and physical properties of such materials. Thus, nucleating agents are widely used in the crystallization process of polymers such as polypropylene, polyesters (polyethylene terephthalate), polyamides and the like.

However, there are polymers whose polymerization process does not depend on nucleating agents; such polymers are characterized by very high or very low crystal growth rates. For example, for a fast crystallizing polymer such as polyethylene, in particular high-density polyethylene (HDPE), the use of nucleating agents is unreasonable since they are either ineffective or weakly effective (http://plastinfo.ru/information/articles/149/).

Thus, the use of nucleating agents for the production of materials with a required set of operational and technological properties is widely described in literature, but there is no information on their use as additives that improve the compatibility between polyethylenes of different classes in their multicomponent compositions.

Given the fact that the crystallization process of phases of HDPE and LPE occurs separately and the crystallization of HDPE is ahead of the LPE crystallization, it can be assumed that the formed spatial structure of the HDPE crystalline phase inhibits the process of the LPE macromolecules capable of crystallization due to the uniformly distributed centers of the nucleating agent, thereby creating spatial barriers for them and increasing viscosity of the system as a whole. This inhibitory effect of the HDPE crystalline phase on the crystallization process of LPE macromolecules leads to that the LPE phase has insufficient time to reach a critical size of its domains and, thus, separate from the LDPE phase combined with it, including because the whole composition already has cooled down to this time and reached the viscosity value that prevents the translational flow of macromolecules relative to each other. Thus, the use of nucleating agents in a composition based on polyethylenes of different structural organization makes it possible to significantly improve their compositional compatibility and to provide a composition that is characterized by a set of properties that are absent in separate components.

The term "compositional compatibility" in the present invention means the mutual "miscibility" of polymers, which provides a composition with high physical and mechanical, and operational properties.

Thus, according to the present invention, a composition is provided that includes the following components:
- 10 to 89.99 wt.% of low-density polyethylene (LDPE);
- 5 to 84.99 wt.% of linear polyethylene (LPE);
- 5 to 84.99 wt.% of high-density polyethylene (HDPE);
- 0.01 to 15 wt.% of a nucleating agent; and
- 0 to 5 wt.% of an optional other additive wherein the HDPE is characterized by an MFR(190/c,2.16kg) of from 0.1 to 5 g/10 min

The **LDPE** used herein is a polyethylene produced by mechanism of radical-chain polymerization of ethylene under high pressure (up to 2000 atm or more) in tubular or autoclave reactors. The LDPE used in the composition has an MFR_{(190°C/2.16kg)} of from 0.1 to 20 g/10 min, preferably from 0.2 to 10 g/10 min, more preferably from 0.3 to 5 g/10 min, a density of from 0.910 to 0.935 g/cm³, preferably from 0.910 to 0.930 g/cm³, more preferably from 0.915 to 0.925 g/cm³, and a molecular weight in the range of from 50 000 to 400 000, preferably from 240 000 to 350 000.

The molecular weight according to the present invention means an average molecular weight, unless otherwise noted.

The content of LDPE in the composition is from 10 to 89.99 wt.%, preferably from 30 to 80 wt.%.

Any polyethylene of known trademarks or mixtures thereof can also be used as LDPE. For example, trademarks of LDPE that can be used include PE 5303-003, PE 15803-020, PE 10803-020, PE 11503-070, PE 16803-070, Novex 20P730, LDPE 19N430, CA 8200, MA 8200 and others.

The **LPE** used herein is a polyethylene produced by a method of anionic-coordination copolymerization of ethylene and higher C₃₋₁₀ α-olefins under low pressure on Ziegler-Natta catalysts, according to standard industrial techniques. The LDPE used in the composition has an MFR_{(190°C/2.16kg)} of from 0.1 to 20 g/10 min, preferably from 0.3 to 10, more preferably from 0.5 to 5 g/10 min, a density of from 0.895 to 0.935 g/cm³, preferably from 0.910 to 0.925 g/cm³, and a molecular weight in the range of from 50 000 to 400 000, preferably from 70 000 to 250 000, and most preferably from 80 000 to 100 000.

It is preferable to use LPE of low or medium density.

The content of LPE in the composition is from 5 to 84.99 wt.%, preferably from 10 to 50 wt.%.

Any polyethylene of known trademarks or mixtures thereof can also be used as LPE. For example, trade marks of LPE that can be used include XP 940 0, XP 9200, XP 9100, 3306WC4, PE 5118Q, UF414C4, 3840, SABIC LLDPE 318B, SABIC LLDPE 6318 BE, SABIC LLDPE R500035 and others.

The **HDPE** used herein is a polyethylene produced by a method of anionic-coordination copolymerization of ethylene and higher C₃₋₁₀ α-olefins under low pressure on Ziegler-Natta catalysts, according to standard industrial techniques, and/or a multi-(bi)modal polyethylene (multi-(bi)modal HDPE) produced according to a two-reactor scheme by a method of anionic-coordination homo- or copolymerization of ethylene and higher C₃₋₁₀ α-olefins under low pressure on Ziegler-Natta catalysts, according to standard industrial techniques.

The composition according to the invention can comprise both HDPE and multi-(bi)modal HDPE, and a mixture thereof.

HDPE used in the composition are characterized by an MFR_{(190°C/2.16kg)} of from 0.1 to 5 g/10 min, more preferably from 0.5 to 5 g/10 min, and have a density of from 0.935 to 0.970 g/cm³, preferably from 0.940 to 0.960 g/cm³. The molecular weight of HDPE is from 50 000 to 400 000, preferably from 75 000 to 200 000, and multi-(bi)modal HDPE comprises a low molecular weight fraction with a molecular weight of from 30 000 to 60 000 and a high molecular weight fraction with a molecular weight of from 100 000 to 800 000.

The content of HDPE and/or multi-(bi)modal HDPE in the composition is from 5 to 84.99 wt.%, preferably from 10 to 50 wt.% and from 10 to 40 wt.%, preferably from 10 to 30 wt.%, and more preferably from 10 to 20 wt.%, respectively.

Any polyethylene of known trademarks or mixtures thereof can be used as HDPE. For example, trademarks of HDPE that can be used include PE 6948C, PND-276-73, PE2NT22-12, PND 273-83, SABIC HDPE B5205, SABIC HDPE B5429, SABIC HDPE F04660, PND PE30T-49, Yuzex 6100, P601 KU, H1000P and others.

The nucleating agent used herein can be an inorganic and/or organic compound known in the art.

Inorganic nucleating agents include carbon black (soot), talc, titanium dioxide, chalk, kaolin, silicon dioxide, preferably carbon black (soot) and talc.

Organic nucleating agents include dibenzylidene sorbitol derivatives, in particular, dibenzylidene sorbitol derivatives with a melting point of less than 230°C, for example, 3,4-dimethyl dibenzylidene sorbitol, 1,2,3-trideoxy-4,6:5,7-bis-O-[(4-propylphenyl)methylene]nonitol sorbitol, salts of carboxylic, phosphonic and other organic acids of aliphatic, cycloaliphatic, aromatic, heterocyclic nature and others, for example, zinc stearate, and 1,2-cyclohexane dicarboxylic acid calcium salt. It is preferable to use 3,4-dimethyl dibenzylidene sorbitol, zinc stearate, and 1,2-cyclohexane dicarboxylic acid calcium salt.

A mixture of an inorganic and an organic nucleating agent is possible as well.

The content of the nucleating agent in the composition is from 0.01 to 15%, preferably from 0.02 to 10 wt.%.

It is preferable to use a dispersed nucleating agent with a particle size of more than 10 µm, preferably from 1 to 3 µm. In addition, a particle aspect ratio of 1:1 to 20:1, preferably from 3:1 to 5:1, is preferable. The term "aspect ratio" as used herein means a ratio of particle length to diameter.

In addition, the composition can comprise other additives such as antioxidants, heat stabilizers, light stabilizers, or mixtures thereof, and others. Such additives may be sulfur-containing antioxidants, phenolic or phosphite antioxidants, for example pentaerythritol ester of 3,5-di-tert-butyl-4-hydroxy-phenylpropionic acid (trademark, Irganox 1010), tri-(phenyl-2,4-di-tert-butyl)phosphite (trademark, Irgafos 168), and/or similar heat stabilizers of other trademarks, and amine light stabilizers and stabilizers of other types, or synergistic mixtures of stabilizers of trademarks such as Irganox B225, Irganox B215 and others.

The content of other additives in the composition is from 0 to 5%, preferably from 0.05 to 3.5 wt.%.

The composition according to the invention can be prepared by any method known in the art.

The composition can be prepared by mixing components in any order at a temperature higher than the melting points of the polyethylene components composing the composition and lower than their decomposition temperature.

One embodiment of the method for preparing the composition includes a step of previously preparing a mixture (a) comprising a nucleating agent and one of the polyethylenes used in the composition, preferably LPE or HDPE. When preparing the mixture (a), the whole amount of the nucleating agent comprised in the composition is used. The amount of the nucleating agent in the previously prepared mixture (a) is from 20 to 60 wt.%, preferably from 30 to 50 wt.%. The mixture (a) also can comprise an additive, for example an antioxidant, if used. Then, the mixture (a) is mixed with the remaining components of the composition.

When the composition comprises other additives, one embodiment of the method for preparing the composition includes a step of previously preparing a mixture (b) comprising another additive, for example an antioxidant, and one of the polyethylenes used in the composition, preferably LDPE. When preparing the mixture (b), the whole amount of the additive(s) comprised in the composition is used. The amount of said another additive in the previously prepared mixture (b) is from 5 to 20%, preferably from 10 to 15 wt.%. Then, the mixture (b) is mixed with the remaining components of the composition.

In addition, in one embodiment of the method for preparing the composition, it is preferable to prepare previously a mixture (c) of HDPE and/or LDPE with LPE at a ratio of 1:1 to 1:5, preferably 1:4, which improves distribution of polymers throughout the composition. Preferably, the mixture (c) comprises HDPE and LPE. Then, the prepared mixture (c) is mixed with the remaining components of the composition.

The most preferable method for preparing the composition includes steps of preparing intermediate mixtures: a) a mixture of a nucleating agent and one of the polyethylenes used in the composition; b) a mixture of additives, if used, and one of the polyethylenes used in the composition; and c) a mixture of HDPE and/or LDPE with LPE at a ratio of 1:1 to 5:1, preferably 1:4. After that, the prepared intermediate mixtures (a), (b), and (c) are mixed with each other and with HDPE and/or LDPE and/or LPE, if necessary, so as to achieve in the composition a required content of each polyethylene, followed by processing in an extruder.

The components are mixed at a temperature higher than the melting points of the polyethylenes composing the composition and lower than their decomposition temperatures. Preferably, the temperature of mixing the components is from 140 to 280°C, more preferably from 150 to 250°C, and most preferably from 170 to 210°C.

The components are mixed in any mixing equipment, in particular rotary blade mixers, rake mixers, screw plasticizers, planetary mixers, belt-screw mixers, pneumatic mixers, as well as blade mixers, propeller mixers, turbine mixers, anchor mixers, gyro mixers, and others.

Processing modes do not differ from standard ones used in each particular case, depending on rheological characteristics of polyethylenes. The most preferable method for processing is extrusion of PE melt. The resulting composition is extruded at a temperature of from 150 to 215°C.

The compositions prepared by the method according to the invention can be used as full-value raw material for the production of articles such as outer sheaths of fiber optic cables, insulation of electrical cables, insulation of steel pipes, tubular film materials, foams, etc.

### Embodiments of the invention

The following materials were used as initial **components of the composition:**
Polyethylenes:
1) **LDPE**
   - HPPE 15303-003 and
   - HPPE 15803-020,
   base grades produced by "TNKh", OOO (LLC), Tomsk;
2) **LPE**
   - PE 5118Q, d=0.916-0.920 g/cm³, MFR_{(190/2.16kg)}=2.8-3.4 g/10 min, produced by "Nizhnekamskneftekhim", PAO (JSC), Russia;
   - Daelim XP 9400, d=0.915 g/cm³, MFR_{(190/2.16kg)}=3.7 g/10 min, produced by Daelim Industrial Co., Ltd, Korea;
3) **HDPE**
   - PE 6948C, d=0.946-0.950 g/cm³, MFR_{(190/5kg)}=0.1-0.4 g/10 min, produced by "Nizhnekamskneftekhim", PAO (JSC), Russia;
   - LPPE 276-73 d=0.958-0.963 g/cm³, MFR_{(190/5kg)}=2.6-3.2 g/10 min, and
   - PE2NT-22-12, d=0.958-0.965 g/cm³, MFR_{(190/2.16kg)}=6-9 g/10 min, produced by "Kazannefteorgsintez", PAO (JSC), Russia;
4) **Bimodal HDPE** - Yuzex 6100, d=0.952 g/cm³, MFR_{(190/5kg)}=0.05 g/10 min, produced by SK, Korea,
   **Nucleating agents (NA)**
   Inorganic NAs: carbon black, N-339 produced by "Omskcarbongroup", OOO (LLC), Russia;
   talc, Jettfine 3CA produced by Luzenac, France;
   Organic NAs: Millad 3988 (3,4-dimethyldibenzylidene sorbitol) and Hyperform HPN-20E (34% zinc stearate and 66% 1,2-cyclohexane dicarboxylic acid calcium salt) produced by Milliken (USA);

### Other additives:

An antioxidant: Irganox B225

### Methods of studying compositions

*The melt flow rate* was determined at a temperature of 190°C and a load of 2.16 N, according to GOST 11645.

**The tensile yield strength, tear strength and relative elongation at break** were determined according to GOST 11262 at a speed of testing of 50 mm/min.

*The flexural modulus* was determined according to ASTMD 790; the type of testing was a three-point bend test at a speed of testing of 1.3 mm/min.

*The Shore D*/*1 hardness* was determined according to GOST 24621.

*The Vicat (10H) heat resistance test* was carried out according to ASTM 1525.

*The resistance to cracking* was determined according to GOST 13518.

*The melt strength* was measured with a capillary rheometer Smart RHEO 2000. The melt was forced through the capillary, filled into a pulling device and pulled with a constant acceleration. Once reaching a specific pulling speed, the pulled thread broke. The force fixed on a tensometer at the time of breaking the thread was considered as the melt strength. The strength of polyethylene melt was measured by using a capillary with a diameter of 2 mm and at a temperature of 190°C.

*The strength of films in the longitudinal and transverse directions, as well as relative elongation at break in the longitudinal and transverse directions,* were determined according to GOST 14236-81, using a testing machine Zwick Z2.5 (Zwick/Roell, Germany). Samples were conditioned before testing and then tested at room temperature and non-specified humidity.

*The specific volumetric and the specific surface electrical resistivity* were determined according to GOST 6433.2-71. The electrical resistivity at constant voltage was measured by using a device Teraohmeter (Ceast, Italy). Samples were conditioned before testing and then tested at a temperature of 23(+/-2)°C and a humidity of 50(+/- 5)%.

*The electrical strength* (breakdown point) was measured according to GOST 6433.3-71. The electrical strength at variable (frequency 50 Hz) and constant voltage was measured by using a device Dielectric Rigidity (Ceast, Italy). Samples were conditioned before testing and then tested at a temperature of 23(+/-2)°C and a humidity of 50(+/-5)%.

### Examples

### Preparation of the composition according to the invention:

PE compositions were prepared by using steps of previously preparing mixtures of a nucleating agent, an antioxidant and any one of the used PE.

The previously prepared mixtures were mixtures of the nucleating agent with LPE or HDPE, mixtures of the antioxidant (if used) with LDPE, and mixtures of HDPE and/or LDPE with LPE. Said mixtures were prepared in a mixer of Brabender type at a temperature of 160 to 190°C.

Then the mixtures were mixed in a blade mixer to prepare a composition.

The resulting composition was processed in an extrusion line. The maximum melt temperature during the extrusion process was 210°C.

Samples for physical and mechanical, thermal physical and other tests were prepared by a hot-pressing method under standard conditions at a temperature of 160 to 190°C.

Compositions and results of their studies are given in Tables 1-4 for Examples 1-44. Examples 1-4, 6-12, 17-22, 26-28, 30-32, and 35-45 relate to compositions according to the invention. These examples are given only as illustration of the present invention and are not intended to limit its scope.

**Table 1. Compositions of Examples 1-11 and their properties**

| **Materials** | | **Component composition, wt.%** | | | | | | | | | | |
|---|---|---|---|---|---|---|---|---|---|---|---|---|
| | | Example 1 | Example 2 | Example 3 | Example 4 | Example 5 (comp.) | Example 6 | Example 7 | Example 8 | Example 9 | Example 10 | Example 11 |
| LDPE | HPPE 15303-003 | 42.5 | 47.5 | 52.5 | 67.5 | 67.5 | 67.5 | 62.5 | 57.5 | 67.5 | 67.5 | 57.5 |
| | HPPE 15803-020 | - | - | - | - | - | - | - | - | - | - | - |
| LPE | PE 5118Q | - | - | - | - | - | - | - | - | - | - | - |
| | Daelim XP 9400 | 8.0 | 8.0 | 8.0 | 10.0 | 3.0 | 20.0 | 20.0 | 20.0 | 24.0 | 24.0 | 24.0 |
| HDPE | PE 6948C | 17.0 | 17.0 | 17.0 | 5.0 | 7.0 | - | - | - | 6.0 | - | - |
| | LPPE 276-73 | 30.0 | 25.0 | 20.0 | 15.0 | 20.0 | 10.0 | 15.0 | 20.0 | - | - | 16.0 |
| | PE2NT -22-12 | - | - | - | - | - | - | - | - | - | - | - |
| Bimodal HDPE | Yuzex 6100 | - | - | - | - | - | - | - | - | - | 6.0 | - |
| Carbon black N-339 | | 2.5 | 2.5 | 2.5 | 2.5 | 2.5 | 2.5 | 2.5 | 2.5 | 2.5 | 2.5 | 2.5 |
| Irganox B225 (in excess of the formulation) | | 0.3 | 0.3 | 0.3 | 0.3 | 0.3 | 0.3 | 0.3 | 0.3 | 0.3 | 0.3 | 0.3 |
| Results of studies: | | | | | | | | | | | | |
| MFR_{(190/2,16)}, g/10 min | | 0.26 | 0.25 | 0.24 | 0.34 | 0.27 | 0.51 | 0.50 | 0.60 | 0.47 | 0.45 | 0.51 |
| Tensile yield, MPa | | 18.0 | 16.8 | 16.0 | 13.1 | 14.5 | 10.8 | 11.3 | 12.3 | 10.3 | 10.8 | 12.7 |
| Tensile strength, MPa | | 19.4 | 19.1 | 19.5 | 18.4 | 16.8 | 21.3 | 20.1 | 21.0 | 20.7 | 20.7 | 20.5 |
| Relative elongation at break at +23°C, % | | 780 | 740 | 770 | 760 | 680 | 800 | 780 | 790 | 790 | 770 | 780 |
| Relative breaking elongation at -45°C, % | | 200 | 205 | 215 | 250 | 165 | 360 | 325 | 250 | 400 | 400 | 290 |
| Shore D hardness (1 | | 57 | 56 | 55 | 52 | 53 | 53 | 54 | 54 | 53 | 52 | 54 |
| sec), units | | | | | | | | | | | | |
| T_{Vicat} 10H, °C | | 116 | 114 | 112 | 105 | 108 | 104 | 106 | 107 | 104 | 104 | 109 |
| Resistance to cracking, h | | >2000 | >2000 | >2000 | >2000 | 900 | >2000 | >2000 | >2000 | >2000 | >2000 | >2000 |
| Melt strength_{(190/2/12)}, cN | | 16 | 18 | 19 | 26 | 20 | 25 | 23 | 22 | 25 | 25 | 22 |
| Surface quality | | + | + | + | + | - | + | + | + | + | + | + |

**Table 2. Compositions of Examples 2-22 and their properties**

| **Materials** | | **Component composition, wt.%** | | | | | | | | | | |
|---|---|---|---|---|---|---|---|---|---|---|---|---|
| | | Example 12 | **Example 13 (comp.)** | **Example 14 (comp.)** | **Example 15 (comp.)** | **Example 16 (comp.)** | Example 17 | Example 18 | Example 19 | Example 20 | Example 21 | Example 22 |
| LDP E | HPPE 15303-003 | 57.5 | 67.5 | 70.0 | 67.5 | - | 57.5 | 57.5 | - | 57.5 | 39.0 | 34.0 |
| | HPPE 15803-020 | - | - | - | - | - | 10.0 | 10.0 | 47.5 | 10.0 | 13.2 | 13.2 |
| LPE | PE 5118Q | - | - | - | - | - | - | - | - | 24.0 | - | - |
| | Daelim XP 9400 | 32.0 | 30.0 | 24.0 | - | 67.5 | 24.0 | 24.0 | 24.0 | - | 24.0 | 24.0 |
| HDP E | PE 6948C | 8.0 | - | 6.0 | - | - | 6.0 | 6.0 | 6.0 | 6.0 | 6.0 | 6.0 |
| | LPPE 276-73 | - | - | - | 30.0 | 30.0 | - | - | 20.0 | - | 10.0 | 10.0 |
| | PE2NT-22-12 | - | - | - | - | - | - | - | - | - | 5.0 | 10.0 |
| Bimo dal HDP E | Yuzex 6100 | - | - | - | - | - | - | - | - | - | - | - |
| Carbon black N-339 | | 2.5 | 2.5 | - | 2.5 | 2.5 | 2.5 | 2.5 | 2.5 | 2.5 | 2.5 | 2.5 |
| Irganox B225 (in excess of the formulation) | | 0.3 | 0.3 | 0.3 | 0.3 | 0.3 | 0.3 | 0.3 | 0.3 | 0.3 | 0.3 | 0.3 |
| **Results of studies:** | | | | | | | | | | | | |
| MFR_{(190/2,16)}, g/10 min | | 0.52 | 0.61 | 0.47 | 0.51 | 0.94 | 0.52 | 0.52 | 1.10 | 0.51 | 0.74 | 0.89 |
| Tensile yield, MPa | | 11.3 | 10.1 | 10.7 | 13.2 | 15.7 | 10.6 | 10.6 | 14.3 | 12.5 | 13.2 | 14.8 |
| Tensile strength, MPa | | 21.0 | 17.5 | 18.6 | 15.5 | 25.5 | 19.7 | 19.7 | 19.3 | 17.3 | 20.2 | 20.9 |
| Relative elongation at break at +23°C, % | | 680 | 570 | 580 | 450 | 690 | 720 | 720 | 770 | 700 | 750 | 750 |
| Relative breaking elongation at -45°C, % | | 360 | 150 | 180 | 95 | 250 | 270 | 270 | 200 | 210 | 250 | 225 |
| Shore D hardness (1 sec), c.u. | | 55 | 48 | 52 | 55 | 57 | 50 | 50 | 53 | 52 | 55 | 56 |
| T_{Vicat} 10H, °C | | 107 | 95 | 100 | 111 | 113 | 101 | 101 | 104 | 103 | 104 | 106 |
| Resistance to cracking, h | | >2000 | >2000 | >2000 | >2000 | >2000 | >2000 | >2000 | >2000 | >2000 | >2000 | >2000 |
| Melt strength_{(190/2/12)}, cN | | 23 | 15 | 20 | 13 | 3 | 20 | 20 | 15 | 22 | 21 | 20 |
| Surface quality | | + | - | - | - | + | + | + | + | + | + | + |

**Table 3. Compositions of Examples 23-33 and their properties**

| **Materials** | | **Component composition, wt.%** | | | | | | | | | | |
|---|---|---|---|---|---|---|---|---|---|---|---|---|
| | | Example 23 (contr.) | **Example** 24 (contr.) | Example 25 (contr.) | Example 26 | Example 27 | Example 28 | Example 29 (contr.) | Example 30 | Example 31 | Example 32 | Example 33 (contr.) |
| LDPE | HPPE 15303-003 | 22.2 | 22.2 | 41.5 | 41.0 | 35.5 | 30.5 | 25.5 | 41.0 | 38.5 | 36.5 | 30.5 |
| | HPPE 15803-020 | - | - | 13.2 | 13.2 | 13.2 | 13.2 | 13.2 | 13.2 | 13.2 | 13.2 | 13.2 |
| LPE | PE 6948C | 5.0 | 5.0 | 6.0 | 6.0 | 6.0 | 6.0 | 6.0 | 6.0 | 6.0 | 6.0 | 6.0 |
| | Daelim XP 9400 | 65.0 | 5.0 | 24.0 | 24.0 | 24.0 | 24.0 | 24.0 | 24.0 | 24.0 | 24.0 | 24.0 |
| HDPE | PE 6948C | - | - | - | - | - | - | - | - | - | - | - |
| | LPPE 276-73 | 5.0 | 65.0 | 10.0 | 10.0 | 10.0 | 10.0 | 10.0 | 10.0 | 10.0 | 10.0 | 10.0 |
| | PE2NT-22-12 | - | - | 5.0 | 5.0 | 5.0 | 5.0 | 5.0 | 5.0 | 5.0 | 5.0 | 5.0 |
| Bimod al HDPE | Yuzex 6100 | - | - | - | - | - | - | - | - | - | - | - |
| Carbon black N-339 | | 2.5 | 2,5 | - | 0.5 | 5.0 | 10.0 | 15.0 | - | - | - | - |
| **Talc Jettfine 3CA** | | - | - | - | - | - | - | - | 0.5 | 3.0 | 5.0 | 11.0 |
| Irganox B225 (in excess of the formulation) | | 0.3 | 0.3 | 0.3 | 0.3 | 0.3 | 0.3 | 0.3 | 0.3 | 0.3 | 0.3 | 0.3 |
| **Results of studies:** | | | | | | | | | | | | |
| MFR_{(190/2,16)}, g/10 min | | 0.78 | 0.43 | 0.73 | 0.72 | 0.71 | 0.70 | 0.65 | 0.74 | 0.72 | 0.70 | 0.68 |
| Tensile yield, MPa | | 10.2 | 16.5 | 12.1 | 12.7 | 13.4 | 13.6 | 13.7 | 12.4 | 13.2 | 13.7 | 14.0 |
| Tensile strength, MPa | | 18.5 | 15.2 | 16.8 | 20.3 | 23.5 | 22.5 | 21.5 | 19.2 | 23.0 | 23.9 | 22.1 |
| Relative elongation at break at +23°C, % | | 580 | 550 | 400 | 600 | 740 | 600 | 450 | 500 | 690 | 640 | 470 |
| Relative breaking elongation at -45°C, % | | 190 | 120 | 100 | 250 | 340 | 270 | 190 | 200 | 280 | 220 | 180 |
| Shore D hardness (1 sec), c.u. | | 48 | 57 | 53 | 54 | 55 | 56 | 56 | 55 | 56 | 57 | 58 |
| T_{Vicat} 10H, °C | | 98 | 111 | 102 | 103 | 104 | 105 | 105 | 104 | 105 | 106 | 107 |
| Resistance to cracking, h | | 500 | 100 | 550 | >2000 | >2000 | >2000 | 600 | >2000 | >2000 | >2000 | 700 |
| Melt strength_{(190/2/12)}, cN | | 10 | 12 | 18 | 20 | 20 | 18 | 13 | 23 | 25 | 26 | 24 |
| Surface quality | | - | - | - | + | + | + | - | + | + | + | - |

**Table 4. Compositions of Examples 34-44 and their properties**

| **Materials** | | **Component composition, wt.%** | | | | | | | | | | | |
|---|---|---|---|---|---|---|---|---|---|---|---|---|---|
| | | Examp le 34 | Examp le 35 | Examp le 36 | Examp le 37 | Examp le 38 | Examp le 39 | Examp le 40 | Examp le 41 | Examp le 42 | Examp le 43 | Examp le 44 | Examp le 45 |
| LDPE | HPPE 15303-003 | 77.5 | 77.5 | 41.5 | 41.4 | 41.2 | 41.0 | 41.5 | 41.4 | 41.2 | 41.0 | 40.5 | 38.9 |
| | HPPE 15803-020 | - | - | 13.2 | 13.2 | 13.2 | 13.2 | 13.2 | 13.2 | 13.2 | 13.2 | 13.2 | - |
| LPE | PE 6948C | 4.0 | - | 6.0 | 6.0 | 6.0 | 6.0 | 6.0 | 6.0 | 6.0 | 6.0 | 6.0 | 6.0 |
| | Daelim XP 9400 | 16.0 | 16.0 | 24.0 | 24.0 | 24.0 | 24.0 | 24.0 | 24.0 | 24.0 | 24.0 | 24.0 | 24.0 |
| HDPE | PE 6948C | - | - | - | - | - | - | - | - | - | - | - | - |
| | LPPE 276-73 | - | 4.0 | 10.0 | 10.0 | 10.0 | 10.0 | 10.0 | 10.0 | 10.0 | 10.0 | 10.0 | 28.3 |
| | PE2NT-22-12 | - | - | 5.0 | 5.0 | 5.0 | 5.0 | 5.0 | 5.0 | 5.0 | 5.0 | 5.0 | - |
| Bimodal HDPE | Yuzex 6100 | - | - | - | - | - | - | - | - | - | - | - | - |
| Carbon black N-339 | | 2.5 | 2.5 | - | - | - | - | - | - | - | - | - | 2.5 |
| Millad 3988 | | - | - | 0.05 | 0.10 | 0.30 | 0.50 | - | - | - | - | - | |
| HPN-20E | | - | - | - | - | - | - | 0.05 | 0.10 | 0.30 | 0.50 | 1.0 | |
| Irganox B225 (in excess of the formulation) | | 0,3 | 0,3 | 0.3 | 0.3 | 0.3 | 0.3 | 0.3 | 0.3 | 0.3 | 0.3 | 0.3 | 0.3 |
| **Results of studies:** | | | | | | | | | | | | | |
| MFR_{(190/2,16)}, g/10 min | | 0.41 | 0.45 | 0.74 | 0.73 | 0.72 | 0.70 | 0.74 | 0.74 | 0.73 | 0.72 | 0.72 | |
| Tensile yield, MPa | | 10.3 | 10.6 | 13.0 | 13.1 | 13.5 | 13.6 | 13.3 | 13.5 | 13.7 | 13.8 | 13.7 | |
| Tensile strength, MPa | | 18.8 | 19.1 | 16.5 | 17.7 | 19.0 | 19.1 | 21.0 | 19.5 | 21.7 | 21.8 | 21.7 | 25.5 |
| Relative elongation at break at +23°C, % | | 760 | 700 | 650 | 630 | 610 | 600 | 690 | 670 | 690 | 680 | 670 | 700 |
| Relative breaking elongation at -45°C, % | | 340 | 250 | - | - | - | - | - | - | - | - | - | 250 |
| Shore D hardness (1 sec), c.u. | | 50 | 51 | 55 | 55 | 55 | 55 | 56 | 56 | 57 | 57 | 57 | 61 |
| T_{Vicat} 10H, °C | | 101 | 102 | 103 | 103 | 103 | 103 | 104 | 104 | 104 | 104 | 104 | 107 |
| Resistance to cracking, h | | 28 | 25 | 16 | 17 | 18 | 18 | 20 | 20 | 21 | 20 | 20 | |
| Melt strength_{(190/2/12)}, cN | | + | + | + | + | + | + | + | + | + | + | + | |
| Surface quality | | | | | | | | | | | | | >2000 |
| Irganox B225 (in excess of the formulation) | | | | | | | | | | | | | -73 |

The results of the experiments show an advantage of the compositions consisting of three components: LDPE, LPE, and HDPE. Said compositions (examples 1-4, 6-12, 17-22) demonstrate improved properties over the compositions consisting of two components: LDPE and LPE (Example 13), LDPE and HDPE (Example 15), LPE and HDPE (Example 16).

It is also shown that in the absence of a nucleating agent (Example 14), the properties of the compositions consisting of three components are significantly deteriorated, in particular, the following parameters are reduced: tensile strength, relative elongation at break at 23°C and -45°C, Vicat heat resistance, and melt strength; the surface quality of the extruded threads is deteriorated as well.

The results of the above-disclosed experiments showed that to obtain a desired good combination of surface properties, fluidity and physical and mechanical characteristics of PE compositions, **a composition must comprise simultaneously a mixture of LDPE, LPE, HDPE and a nucleating agent.**

The properties of the composition prepared according to the invention allows its use in various fields, including:
- the outer sheath of fiber-optic cables;
- insulation for electrical cables;
- insulation for steel pipes;
- tubular film materials;
- foamed materials, etc.

Thus, for example, the compositions of Examples 21, 22, 27, and 28 are characterized by key properties allowing compositions to be used as the outer sheath of fiber optic cables.

The composition of Example 21 satisfies, in particular, key requirements for compositions intended for use as insulation of electric cables. In order to confirm realization of this intended purpose, said composition was additionally studied with respect to its dielectric characteristics. According to the conducted studies, the composition is characterized by a specific volumetric electrical resistivity of 9·10¹⁸ Ω·cm, an electric strength of 55 kV/mm, and a brittleness point of less than -73°C.

The composition of Example 45 satisfies, in particular, key requirements for the compositions intended for use as insulation of steel pipes.

The compositions of Examples 4, 6, 9, 10, 31, 32, 34, and 35 satisfy the key requirements for the compositions intended for use in the manufacture of foamed materials.

The composition according to Example 21 with a melt strength of 21 cN satisfies, in particular, key requirements for tubular PE films. The tubular film with a thickness of 50 µm, prepared by a standard method in a laboratory line applied to an extruder Collin (Germany) showed the following test results: a transverse strength of 24.5 MPa, a longitudinal strength of 26.0 MPa, a longitudinal relative elongation of 470%, a transverse relative elongation of 630%, a longitudinal tear resistance of 155 kg/cm, a transverse tear resistance of 203 kg/cm, and a tension modulus of 360 MPa. It should be noted that such practically important parameter as tear resistance obtained for the film made of the composition according to Example 21 is in several times higher than a standard level of this parameter in films made of HDPE and corresponds only to the level of composite (multilayer) PE films. In addition, Table 5 demonstrates properties of films of the compositions prepared according to the invention. The thickness of the films is 50-60 µm. The nucleating agents used in these examples are not a transparent agent and, therefore, optical indices (haze) of the films practically are not changed in the presence of HPN-20E, while in the presence of talc, the haze naturally increases due to dispersed particles of the mineral filler.

**Table 5. PE compositions and physical and mechanical properties of films prepared by blowing**

| **Materials** | | **Component composition, wt.%** | | | | |
|---|---|---|---|---|---|---|
| | | HDPE contr. | PE mixture, contr. | Example 46 | Example 47 | Example 48 |
| LDPE | HPPE 15303-003 | 100.0 | 55.0 | 50.0 | 54.95 | 54.70 |
| LPE | Daelim XP 9400 | | 24.0 | 24.0 | 24.0 | 24.0 |
| HDPE | LPPE 276-73 | | 21.0 | 21.0 | 21.0 | 21.0 |
| Talc Jettfine 3CA | | - | - | 5.0 | - | - |
| HPN-20E | | - | - | - | 0.05 | 0.30 |
| **Film properties:** | | | | | | |
| Longitudinal tensile strength, MPa | | 20.2 | 26.6 | 30.4 | 28.4 | 29.0 |
| Longitudinal relative elongation at break, % | | 450 | 580 | 530 | 610 | 580 |
| Transverse tensile yield, MPa | | 8.7 | 12.2 | 14.2 | 12.5 | 14.4 |
| Transverse tensile strength, MPa | | 20.8 | 27.2 | 30.1 | 28.5 | 30.7 |
| Transverse relative elongation at break, % | | 460 | 710 | 710 | 710 | 700 |
| Haze of film, % | | 21 | 22 | 47 | 20 | 22 |

## Claims

1. A polyethylene composition for the manufacture of an article, comprising the following components:
- 10 to 89.99 wt.% of low-density polyethylene (LDPE);
- 5 to 84.99 wt.% of linear polyethylene (LPE);
- 5 to 84.99 wt.% of high-density polyethylene (HDPE);
- 0.01 to 15 wt.% of a nucleating agent; and
- 0 to 5 wt.% of an optional other additive,
wherein the HDPE is **characterized by** an MFR(190/c,2.16kg) of from 0.1 to 5 g/10 min.

2. The polyethylene composition according to claim 1, wherein the LDPE is **characterized by** an MFR(190/c,2.16kg) of from 0.1 to 20 g/10 min, preferably from 0.2 to 10 g/10 min, more preferably from 0.3 to 5 g/10 min.

3. The polyethylene composition according to claim 1, wherein the LDPE is **characterized by** a density of from 0.910 to 0.935 g/cm³, preferably from 0.910 to 0.930 g/cm³, more preferably from 0.915 to 0.925 g/cm³.

4. The polyethylene composition according to claim 1, wherein the LDPE is **characterized by** a molecular weight of from 50 000 to 400 000, preferably from 240 000 to 350 000.

5. The polyethylene composition according to claim 1, wherein the LPE is a low- or medium-density LPE.

6. The polyethylene composition according to claim 1, wherein the LPE is **characterized by** an MFR(190/c,2.16kg) of from 0.1 to 20 g/10 min, preferably from 0.3 to 10 g/10 min, more preferably from 0.5 to 5 g/10 min.

7. The polyethylene composition according to claim 1, wherein the LPE is **characterized by** a density of from 0.895 to 0.935 g/cm³, preferably from 0.910 to 0.925 g/cm³.

8. The polyethylene composition according to claim 1, wherein the LPE is **characterized by** a molecular weight of from 50 000 to 400 000, preferably from 70 000 to 250 000, most preferably from 80 000 to 100 000.

9. The polyethylene composition according to claim 1, wherein the HDPE is monomodal and/or bimodal, and/or multimodal.

10. The polyethylene composition according to claim 1, wherein the HDPE is **characterized by** an MFR(190/c,2.16kg) of from 0.5 to 5 g/10 min.

11. The polyethylene composition according to claim 1, wherein the HDPE is **characterized by** a density of from 0.935 to 0.970 g/cm³, preferably from 0.940 to 0.960 g/cm³.

12. The polyethylene composition according to claim 9, wherein the monomodal HDPE is **characterized by** a molecular weight of from 50 000 to 400 000, preferably from 75 000 to 200 000.

13. The polyethylene composition according to claim 9, wherein the bimodal and/or multimodal HDPE comprises at least two fractions: a low molecular weight fraction with a molecular weight of from 30 000 to 60 000, and a high molecular weight fraction with a molecular weight of from 100 000 to 800 000.

14. The polyethylene composition according to claim 1, wherein the nucleating agent is an inorganic compound or an organic compound, or a mixture thereof.

15. The polyethylene composition according to claim 14, wherein the inorganic nucleating agent is a compound selected from the group including carbon black (soot), talc, titanium dioxide, chalk, kaolin, silicon dioxide, or a mixture thereof, preferably a compound selected from the group including carbon black (soot), talc, titanium dioxide, or a mixture thereof.

16. The polyethylene composition according to claim 14, wherein the organic nucleating agent is a compound selected from the group including dibenzylidene sorbitol derivatives, in particular, dibenzylidene sorbitol derivatives having a melt point of less than 230°C, such as 3,4-dimethyl dibenzylidene sorbitol, l,2,3-trideoxy-4,6:5,7-bis-0-[(4-propylphenyl)-methylene]nonitol sorbitol, salts of carboxylic, phosphonic acids of aliphatic, cycloaliphatic, aromatic, heterocyclic nature, such as zinc stearate, and 1,2-cyclohexane dicarboxylic acid calcium salt, or a mixture thereof, preferably the organic nucleating agent is 3,4-dimethyl dibenzylidene sorbitol, zinc stearate, and 1,2-cyclohexane dicarboxylic acid calcium salt, or a mixture thereof.

17. The polyethylene composition according to any one of claims 1, 14 to 16, wherein the nucleating agent is a dispersed nucleating agent with a particle size of not more than 10 pm, preferably from 1 to 3 pm.

18. The polyethylene composition according to any one of claims 1, 14 to 16, wherein the nucleating agent is a nucleating agent with an aspect ratio of particles of from 1:1 to 20:1, preferably from 3:1 to 5:1.

19. The polyethylene composition according to claim 1, wherein the content of the LDPE is from 30 to 80 wt.%.

20. The polyethylene composition according to claim 1, wherein the content of the LPE is from 10 to 50 wt.%.

21. The polyethylene composition according to claim 1, wherein the content of the HDPE is from 10 to 50 wt.%.

22. The polyethylene composition according to claim 1, wherein the content of the nucleating agent is from 0.02 to 10 wt.%.

23. A method for preparing a polyethylene composition according to any one of claims 1 to 22, comprising mixing components at a temperature higher than the melting point of polyethylenes composing the composition and lower than their decomposition temperature.

24. The method for preparing a polyethylene composition according to claim 23, comprising a step of previously preparing a mixture (a) comprising a nucleating agent and one of the polyethylenes used in the composition, and then mixing the mixture (a) with the remaining components of the composition.

25. The method for preparing a polyethylene composition according to claim 23, comprising a step of previously preparing a mixture (b) comprising an antioxidant and one of the polyethylenes used in the composition, and then mixing the mixture (b) with the remaining components of the composition.

26. The method for preparing a polyethylene composition according to claim 23, comprising a step of previously preparing a mixture (c) comprising LDPE or HDPE and LPE and then mixing the mixture (c) with the remaining components of the composition.

27. The method for preparing a polyethylene composition according to claim 26, wherein the ratio of LDPE or HDPE to LPE is 1:1 to 5:1, preferably 1:4.

28. The method for preparing a polyethylene composition according to claim 26, wherein the mixture (c) comprises HDPE and LPE.

29. The method for preparing a polyethylene composition according to claim 23, comprising steps of preparing intermediate mixtures: a) a mixture of a nucleating agent and one of the polyethylenes used in the composition; b) a mixture of an antioxidant and one of the polyethylenes used in the composition; c) a mixture of HDPE and/or LDPE with LPE at a ratio of 1:1 to 5:1, preferably 1:4, and then mixing the mixtures (a), (b), and (c) with each other and, if necessary, with HDPE and/or LDPE and/or LPE so as to achieve a required content of each polyethylene in the composition.

30. The method for preparing a polyethylene composition according to any one of claims 23 to 29, wherein the mixing of the components is carried out at a temperature higher than the melting point of the polyethylenes composing the composition and lower than their decomposition temperature.

31. The method for preparing a polyethylene composition according to claim 30, wherein the mixing of the components is carried out at a temperature of from 140°C to 280°C, preferably at a temperature of from 150 to 250°C, more preferably at a temperature of from 170 to 210°C.

32. Use of a composition according to any one of claims 1 to 22 in the manufacture of articles.

33. The use according to claim 32, wherein the article is an outer sheath of fiber optic cables, insulation of electrical cables, insulation of steel pipes, tubular film material, foamed material.

34. An article made of a composition according to any one of claims 1 to 22.

35. The article according to claim 34, wherein the article is an outer sheath of fiber optic cables, insulation of electrical cables, insulation of steel pipes, tubular film material, foamed material.

## Patentansprüche

1. Polyethylen-Zusammensetzung zur Herstellung eines Artikels, umfassend die folgenden Komponenten:
- 10 bis 89,99 Gew.-% Polyethylen niedriger Dichte (LDPE);
- 5 bis 84,99 Gew.-% lineares Polyethylen (LPE);
- 5 bis 84,99 Gew.-% Polyethylen hoher Dichte (HDPE);
- 0,01 bis 15 Gew.-% eines Nukleierungsmittels; und
- 0 bis 5 Gew.-% eines optionalen weiteren Additivs,
wobei das HDPE durch einen MFR(I 90/ c,2. I 6kg) von 0,1 bis 5 g/10 min gekennzeichnet ist.

2. Polyethylen-Zusammensetzung nach Anspruch 1, wobei das LDPE durch einen MFR(I90/c,2,16 kg) von 0,1 bis 20 g/10 min, vorzugsweise von 0,2 bis 10 g/10 min, noch bevorzugter von 0,3 bis 5 g/10 min gekennzeichnet ist.

3. Polyethylen-Zusammensetzung nach Anspruch 1, wobei das LDPE durch eine Dichte von 0,910 bis 0,935 g/cm³, vorzugsweise von 0,910 bis 0,930 g/cm3, noch bevorzugter von 0,915 bis 0,925 g/cm³ gekennzeichnet ist.

4. Polyethylen-Zusammensetzung nach Anspruch 1, wobei das LDPE durch ein Molekulargewicht von 50.000 bis 400.000, vorzugsweise von 240.000 bis 350.000, gekennzeichnet ist.

5. Polyethylen-Zusammensetzung nach Anspruch 1, wobei das LPE ein LPE mit niedriger oder mittlerer Dichte ist.

6. Polyethylen-Zusammensetzung nach Anspruch 1, wobei das LPE durch einen MFR(190/c,2,16 kg) von 0,1 bis 20 g/10 min, vorzugsweise von 0,3 bis 10 g/10 min, noch bevorzugter von 0,5 bis 5 g/10 min gekennzeichnet ist.

7. Polyethylen-Zusammensetzung nach Anspruch 1, wobei das LPE durch eine Dichte von 0,895 bis 0,935 g/cm³, vorzugsweise von 0,910 bis 0,925 g/cm³, gekennzeichnet ist.

8. Polyethylen-Zusammensetzung nach Anspruch 1, wobei das LPE durch ein Molekulargewicht von 50000 bis 400000, vorzugsweise von 70000 bis 250000, am bevorzugtesten von 80000 bis 100000 gekennzeichnet ist.

9. Polyethylen-Zusammensetzung nach Anspruch 1, wobei das HDPE monomodales und/oder bimodales und/oder multimodales Polyethylen ist.

10. Polyethylen-Zusammensetzung nach Anspruch 1, wobei das HDPE durch einen MFR(190/c,2,16 kg) von 0,5 bis 5 g/10 min gekennzeichnet ist.

11. Polyethylen-Zusammensetzung nach Anspruch 1, wobei das HDPE durch eine Dichte von 0,935 bis 0,970 g/cm³, vorzugsweise von 0,940 bis 0,960 g/cm³, gekennzeichnet ist.

12. Polyethylen-Zusammensetzung nach Anspruch 9, wobei das monomodale HDPE durch ein Molekulargewicht von 50000 bis 400000, vorzugsweise von 75000 bis 200000, gekennzeichnet ist.

13. Polyethylen-Zusammensetzung nach Anspruch 9, wobei das bimodale und/oder multimodale HDPE mindestens zwei Fraktionen umfasst: eine Fraktion mit niedrigem Molekulargewicht von 30000 bis 60000 und eine Fraktion mit hohem Molekulargewicht von 100000 bis 800000.

14. Polyethylen-Zusammensetzung nach Anspruch 1, wobei das Nukleierungsmittel eine anorganische Verbindung oder eine organische Verbindung oder eine Mischung davon ist.

15. Polyethylen-Zusammensetzung nach Anspruch 14, wobei der anorganische Nukleierungsmittel eine Verbindung ist, die aus der Gruppe ausgewählt ist, die Ruß (Ruß), Talk, Titandioxid, Kreide, Kaolin, Siliciumdioxid oder eine Mischung davon umfasst, vorzugsweise eine Verbindung, die aus der Gruppe ausgewählt ist, die Ruß (Ruß), Talk, Titandioxid oder eine Mischung davon umfasst.

16. Polyethylen-Zusammensetzung nach Anspruch 14, wobei der organische Nukleierungsmittel eine Verbindung ist, die aus der Gruppe ausgewählt ist, die Dibenzylidensorbit-Derivate umfasst, insbesondere Dibenzylidensorbit-Derivate mit einem Schmelzpunkt von weniger als 230 °C, wie 3,4-Dimethyl-dibenzylidensorbit, 1,2,3-Trideoxy-4,6: 5,7-Bis-0-[(4-propylphenyl)methylen]nonitol-sorbitol, Salze von Carbonsäuren, Phosphonsäuren aliphatischer, cycloaliphatischer, aromatischer, heterocyclischer Natur, wie Zinkstearat, und 1,2-Cyclohexandicarbonsäure-Calciumsalz, oder eine Mischung davon, vorzugsweise ist das organische Nukleierungsmittel 3,4-Dimethyldibenzylidensorbit, Zinkstearat und 1,2-Cyclohexandicarbonsäure-Calciumsalz oder eine Mischung davon.

17. Polyethylen-Zusammensetzung nach einem der Ansprüche 1, 14 bis 16, wobei das Keimbildungsmittel ein dispergiertes Keimbildungsmittel mit einer Partikelgröße von nicht mehr als 10 pm, vorzugsweise von 1 bis 3 pm, ist.

18. Die Polyethylen-Zusammensetzung gemäß einem der Ansprüche 1, 14 bis 16, wobei das Nukleierungsmittel ein Nukleierungsmittel mit einem Aspektverhältnis der Partikel von 1:1 bis 20:1, vorzugsweise von 3:1 bis 5:1, ist.

19. Die Polyethylen-Zusammensetzung gemäß Anspruch 1, wobei der Gehalt an LDPE 30 bis 80 Gew.-% beträgt.

20. Polyethylen-Zusammensetzung nach Anspruch 1, wobei der Gehalt an LPE 10 bis 50 Gew.-% beträgt.

21. Polyethylen-Zusammensetzung nach Anspruch 1, wobei der Gehalt an HDPE 10 bis 50 Gew.-% beträgt.

22. Polyethylen-Zusammensetzung nach Anspruch 1, wobei der Gehalt an Nukleierungsmittel 0,02 bis 10 Gew.-% beträgt.

23. Verfahren zur Herstellung einer Polyethylen-Zusammensetzung gemäß einem der Ansprüche 1 bis 22, umfassend das Mischen von Komponenten bei einer Temperatur, die höher ist als der Schmelzpunkt der die Zusammensetzung bildenden Polyethylene und niedriger als deren Zersetzungstemperatur.

24. Verfahren zur Herstellung einer Polyethylen-Zusammensetzung nach Anspruch 23, umfassend einen Schritt des vorherigen Herstellens einer Mischung (a), die ein Keimbildner und eines der in der Zusammensetzung verwendeten Polyethylene umfasst, und anschließendes Mischen der Mischung (a) mit den restlichen Komponenten der Zusammensetzung.

25. Verfahren zur Herstellung einer Polyethylen-Zusammensetzung nach Anspruch 23, umfassend einen Schritt des vorherigen Herstellens einer Mischung (b), die ein Antioxidationsmittel und eines der in der Zusammensetzung verwendeten Polyethylene umfasst, und anschließendes Mischen der Mischung (b) mit den restlichen Komponenten der Zusammensetzung.

26. Verfahren zur Herstellung einer Polyethylen-Zusammensetzung nach Anspruch 23, umfassend einen Schritt, bei dem zuvor eine Mischung (c) hergestellt wird, die LDPE oder HDPE und LPE umfasst, und anschließend die Mischung (c) mit den übrigen Bestandteilen der Zusammensetzung gemischt wird.

27. Verfahren zur Herstellung einer Polyethylen-Zusammensetzung gemäß Anspruch 26, wobei das Verhältnis von LDPE oder HDPE zu LPE 1:1 bis 5:1, vorzugsweise 1:4 beträgt.

28. Verfahren zur Herstellung einer Polyethylen-Zusammensetzung gemäß Anspruch 26, wobei die Mischung (c) HDPE und LPE umfasst.

29. Verfahren zur Herstellung einer Polyethylen-Zusammensetzung nach Anspruch 23, umfassend die Schritte der Herstellung von Zwischenmischungen: a) einer Mischung aus einem Nukleierungsmittel und einem der in der Zusammensetzung verwendeten Polyethylene; b) einer Mischung aus einem Antioxidationsmittel und einem der in der Zusammensetzung verwendeten Polyethylene;
c) eine Mischung aus HDPE und/oder LDPE mit LPE in einem Verhältnis von 1:1 bis 5:1, vorzugsweise 1:4, und anschließendes Mischen der Mischungen (a), (b) und (c) miteinander und, falls erforderlich, mit HDPE und/oder LDPE und/oder LPE, um einen erforderlichen Gehalt jedes Polyethylens in der Zusammensetzung zu erreichen.

30. Verfahren zur Herstellung einer Polyethylen-Zusammensetzung nach einem der Ansprüche 23 bis 29, wobei das Mischen der Komponenten bei einer Temperatur durchgeführt wird, die höher ist als der Schmelzpunkt der die Zusammensetzung bildenden Polyethylene und niedriger als deren Zersetzungstemperatur.

31. Verfahren zur Herstellung einer Polyethylen-Zusammensetzung nach Anspruch 30, wobei das Mischen der Komponenten bei einer Temperatur von 140 °C bis 280 °C, vorzugsweise bei einer Temperatur von 150 bis 250 °C, noch bevorzugter bei einer Temperatur von 170 bis 210 °C durchgeführt wird.

32. Verwendung einer Zusammensetzung gemäß einem der Ansprüche 1 bis 22 zur Herstellung von Gegenständen.

33. Verwendung gemäß Anspruch 32, wobei der Gegenstand eine Außenhülle von Glasfaserkabeln, eine Isolierung von Elektrokabeln, eine Isolierung von Stahlrohren, ein röhrenförmiges Folienmaterial oder ein Schaumstoff ist.

34. Gegenstand, der aus einer Zusammensetzung gemäß einem der Ansprüche 1 bis 22 hergestellt ist.

35. Der Gegenstand gemäß Anspruch 34, wobei der Gegenstand eine Außenhülle von Glasfaserkabeln, eine Isolierung von Elektrokabeln, eine Isolierung von Stahlrohren, ein röhrenförmiges Folienmaterial oder ein Schaumstoff ist.

## Revendications

1. Composition de polyéthylène pour la fabrication d'un article, comprenant les composants suivants :
- 10 à 89,99 % en poids de polyéthylène basse densité (LDPE) ;
- 5 à 84,99 % en poids de polyéthylène linéaire (LPE) ;
- 5 à 84,99 % en poids de polyéthylène haute densité (HDPE) ;
- 0,01 à 15 % en poids d'un agent nucléant ; et
- 0 à 5 % en poids d'un autre additif facultatif,
dans laquelle le HDPE est **caractérisé par** un MFR(I 90/ c,2. I 6kg) de 0,1 à 5 g/10 min.

2. Composition de polyéthylène selon la revendication 1, dans laquelle le LDPE est **caractérisé par** un MFR(I90/c,2,16 kg) compris entre 0,1 et 20 g/10 min, de préférence entre 0,2 et 10 g/10 min, plus préférablement entre 0,3 et 5 g/10 min.

3. Composition de polyéthylène selon la revendication 1, dans laquelle le LDPE est **caractérisé par** une densité comprise entre 0,910 et 0,935 g/cm³, de préférence entre 0,910 et 0,930 g/cm3, plus préférablement entre 0,915 et 0,925 g/cm³.

4. Composition de polyéthylène selon la revendication 1, dans laquelle le LDPE est **caractérisé par** un poids moléculaire compris entre 50 000 et 400 000, de préférence entre 240 000 et 350 000.

5. Composition de polyéthylène selon la revendication 1, dans laquelle le LPE est un LPE de densité faible ou moyenne.

6. Composition de polyéthylène selon la revendication 1, dans laquelle le LPE est **caractérisé par** un MFR(190/c,2,16 kg) compris entre 0,1 et 20 g/10 min, de préférence entre 0,3 et 10 g/10 min, plus préférablement entre 0,5 et 5 g/10 min.

7. Composition de polyéthylène selon la revendication 1, dans laquelle le LPE est **caractérisé par** une densité comprise entre 0,895 et 0,935 g/cm³, de préférence entre 0,910 et 0,925 g/cm³.

8. Composition de polyéthylène selon la revendication 1, dans laquelle le LPE est **caractérisé par** un poids moléculaire compris entre 50 000 et 400 000, de préférence entre 70 000 et 250 000, plus préférablement entre 80 000 et 100 000.

9. Composition de polyéthylène selon la revendication 1, dans laquelle le PEHD est monomodal et/ou bimodal et/ou multimodal.

10. Composition de polyéthylène selon la revendication 1, dans laquelle le PEHD est **caractérisé par** un MFR(190/c,2,16 kg) compris entre 0,5 et 5 g/10 min.

11. Composition de polyéthylène selon la revendication 1, dans laquelle le PEHD est **caractérisé par** une densité comprise entre 0,935 et 0,970 g/cm³, de préférence entre 0,940 et 0,960 g/cm³.

12. Composition de polyéthylène selon la revendication 9, dans laquelle le HDPE monomodal est **caractérisé par** un poids moléculaire compris entre 50 000 et 400 000, de préférence entre 75 000 et 200 000.

13. Composition de polyéthylène selon la revendication 9, dans laquelle le PEHD bimodal et/ou multimodal comprend au moins deux fractions : une fraction de faible poids moléculaire ayant un poids moléculaire compris entre 30 000 et 60 000, et une fraction de poids moléculaire élevé ayant un poids moléculaire compris entre 100 000 et 800 000.

14. Composition de polyéthylène selon la revendication 1, dans laquelle l'agent nucléant est un composé inorganique ou un composé organique, ou un mélange de ceux-ci.

15. Composition de polyéthylène selon la revendication 14, dans laquelle l'agent nucléant inorganique est un composé choisi dans le groupe comprenant le noir de carbone (suie), le talc, le dioxyde de titane, la craie, le kaolin, le dioxyde de silicium ou un mélange de ceux-ci, de préférence un composé choisi dans le groupe comprenant le noir de carbone (suie), le talc, le dioxyde de titane ou un mélange de ceux-ci.

16. Composition de polyéthylène selon la revendication 14, dans laquelle l'agent nucléant organique est un composé choisi dans le groupe comprenant les dérivés de dibenzylidène sorbitol, en particulier les dérivés de dibenzylidène sorbitol ayant un point de fusion inférieur à 230 °C, tels que le 3,4-diméthyl dibenzylidène sorbito , le 1,2,3-trideoxy-4,6 : 5,7-bis-0-[( 4-propylphényl)méthylène]nonitol sorbitol, des sels d'acides carboxyliques, phosphoniques de nature aliphatique, cycloaliphatique, aromatique, hétérocyclique, tels que le stéarate de zinc, et le sel de calcium de l'acide 1,2-cyclohexanedicarboxylique, ou un mélange de ceux-ci, de préférence, l'agent nucléant organique est le 3,4-diméthyl dibenzylidène sorbitol, le stéarate de zinc et le sel de calcium de l'acide 1,2-cyclohexane dicarboxylique, ou un mélange de ceux-ci.

17. Composition de polyéthylène selon l'une quelconque des revendications 1, 14 à 16, dans laquelle l'agent de nucléation est un agent de nucléation dispersé ayant une taille de particules ne dépassant pas 10 pm, de préférence comprise entre 1 et 3 pm.

18. Composition de polyéthylène selon l'une quelconque des revendications 1, 14 à 16, dans laquelle l'agent nucléant est un agent nucléant ayant un rapport d'aspect des particules compris entre 1:1 et 20:1, de préférence entre 3:1 et 5:1.

19. Composition de polyéthylène selon la revendication 1, dans laquelle la teneur en LDPE est comprise entre 30 et 80 % en poids.

20. Composition de polyéthylène selon la revendication 1, dans laquelle la teneur en LPE est comprise entre 10 et 50 % en poids.

21. Composition de polyéthylène selon la revendication 1, dans laquelle la teneur en HDPE est comprise entre 10 et 50 % en poids.

22. Composition de polyéthylène selon la revendication 1, dans laquelle la teneur en agent nucléant est comprise entre 0,02 et 10 % en poids.

23. Procédé de préparation d'une composition de polyéthylène selon l'une quelconque des revendications 1 à 22, comprenant le mélange des composants à une température supérieure au point de fusion des polyéthylènes composant la composition et inférieure à leur température de décomposition.

24. Procédé de préparation d'une composition de polyéthylène selon la revendication 23, comprenant une étape consistant à préparer préalablement un mélange (a) comprenant un agent nucléant et l'un des polyéthylènes utilisés dans la composition, puis à mélanger le mélange (a) avec les composants restants de la composition.

25. Procédé de préparation d'une composition de polyéthylène selon la revendication 23, comprenant une étape consistant à préparer préalablement un mélange (b) comprenant un antioxydant et l'un des polyéthylènes utilisés dans la composition, puis à mélanger le mélange (b) avec les composants restants de la composition.

26. Procédé de préparation d'une composition de polyéthylène selon la revendication 23, comprenant une étape consistant à préparer préalablement un mélange (c) comprenant du LDPE ou du HDPE et du LPE, puis à mélanger le mélange (c) avec les composants restants de la composition.

27. Procédé de préparation d'une composition de polyéthylène selon la revendication 26, dans lequel le rapport entre le LDPE ou le HDPE et le LPE est compris entre 1:1 et 5:1, de préférence 1:4.

28. Procédé de préparation d'une composition de polyéthylène selon la revendication 26, dans lequel le mélange (c) comprend du HDPE et du LPE.

29. Procédé de préparation d'une composition de polyéthylène selon la revendication 23, comprenant les étapes de préparation de mélanges intermédiaires : a) un mélange d'un agent nucléant et d'un des polyéthylènes utilisés dans la composition ; b) un mélange d'un antioxydant et d'un des polyéthylènes utilisés dans la composition ;
c) un mélange de HDPE et/ou de LDPE avec du LPE dans un rapport de 1:1 à 5:1, de préférence 1:4, puis le mélange des mélanges (a), (b) et (c) entre eux et, si nécessaire, avec du HDPE et/ou du LDPE et/ou du LPE de manière à obtenir une teneur requise de chaque polyéthylène dans la composition.

30. Procédé de préparation d'une composition de polyéthylène selon l'une quelconque des revendications 23 à 29, dans lequel le mélange des composants est effectué à une température supérieure au point de fusion des polyéthylènes composant la composition et inférieure à leur température de décomposition.

31. Procédé de préparation d'une composition de polyéthylène selon la revendication 30, dans lequel le mélange des composants est effectué à une température comprise entre 140 °C et 280 °C, de préférence à une température comprise entre 150 et 250 °C, plus préférablement à une température comprise entre 170 et 210 °C.

32. Utilisation d'une composition selon l'une quelconque des revendications 1 à 22 dans la fabrication d'articles.

33. Utilisation selon la revendication 32, dans laquelle l'article est une gaine extérieure de câbles à fibres optiques, une isolation de câbles électriques, une isolation de tuyaux en acier, un matériau en film tubulaire, un matériau expansé.

34. Article fabriqué à partir d'une composition selon l'une quelconque des revendications 1 à 22.

35. Article selon la revendication 34, dans lequel l'article est une gaine extérieure de câbles à fibres optiques, une isolation de câbles électriques, une isolation de tuyaux en acier, un matériau en film tubulaire, un matériau expansé.
